# EUROPEAN PATENT SPECIFICATION

(11) **EP 1 190 330 B1**
(45) Date of publication and mention of the grant of the patent: **16.01.2008**
(21) Application number: 00935878.9
(22) Date of filing: 05.05.2000
(51) Int. Cl.: H04B 1/28

(54) **PROGRAMMABLE BROADBAND INPUT/OUTPUT PROCESSOR**
PROGRAMMIERBARER BREITBAND EINGABE/AUSGABE PROZESSOR
PROCESSEUR D'ENTREE/SORTIE A LARGE BANDE PROGRAMMABLE

(30) Priority: 07.05.1999 US 133139 P
(43) Date of publication of application: 27.03.2002
(73) Proprietor: Infineon Technologies AG, 81669 München (DE)
(72) Inventor: SUBRAMANIAN, Ravi, Mountain View, CA 94040 (US)
(74) Representative: Zinkler, Franz
(86) International application number: PCT/US2000/012476
(87) International publication number: WO 2000/068803

(56) References cited:
- US-A- 5 625 627
- US-A- 5 712 628
- US-A- 5 818 883
- US-A- 5 822 273

## Description

### BRIEF DESCRIPTION OF THE INVENTION

This invention relates generally to digital communications. More particularly, this invention relates to a technique for broadband input/output processing that facilitates the remote reconfiguration of digital information devices.

### BACKGROUND OF THE INVENTION

As the need for flexibility increases in wireless and wireline systems, it is increasingly important to support high throughput input/output. High throughput input/output is especially important to enable a software-programmable, hardware-reconfigurable product platform. Support for high throughput input/output is critical for infrastructure products, such as base stations in cellular applications and sever sites in cable and remote access systems.

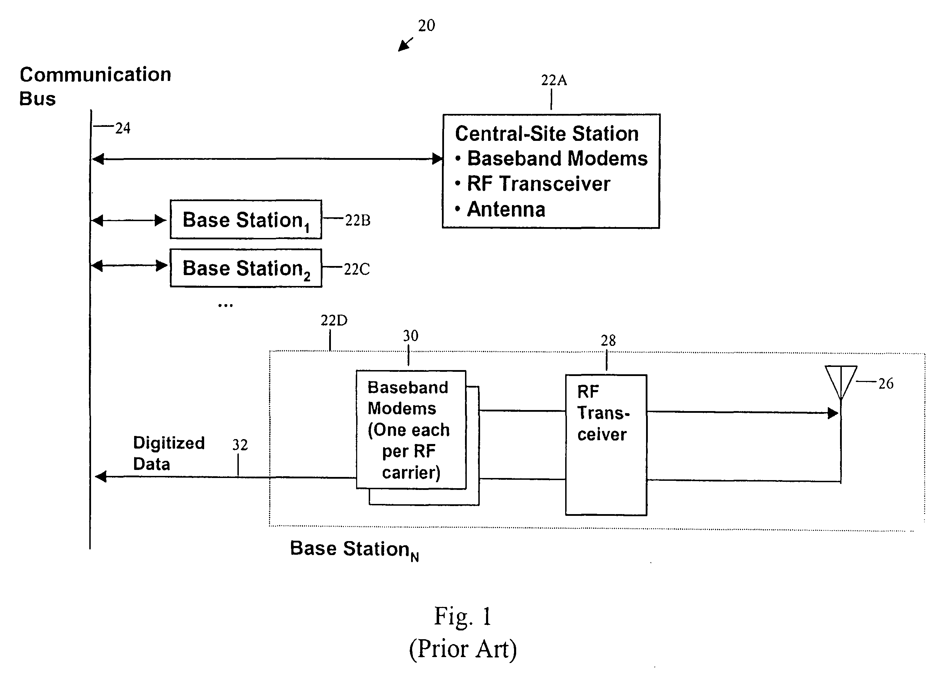

Figure 1 illustrates a prior art cellular communications network 20. Each base station 22 includes an antenna 26, an RF transceiver 28 for frequency up- and downconversion, and a plurality of baseband modems 30. In transmit mode, the modems 30 accept digital baseband information from the system bus 24 via interface 32, and perform the necessary channelization, modulation and other signal processing. The RF transceiver 28 then performs frequency upconversion and power amplification. In receive mode, the RF transceiver 28 performs amplification, filtering and downconversion, while the modems 30 perform demodulation and dechannelization, and output the recovered digital data (information) to system bus 24 via interface 32. The RF transceiver 28 must operate separately on each of a plurality of bands of interest, while the modems 30 must be replicated once for each RF band of interest. Thus, prior art systems have a relatively large number of devices (e.g., modems) distributed throughout the network, making centralized control and repair difficult.

Document US-5,712,628 A describes a digitally programmable radio module for transponder systems as depicted in Fig. 4 thereof. The receiver 100 in the programmable digital radio receives analog Signals 105 from an interrogator and digitizes the analog signals to produce digital interrogation signals 205. The digital interrogation signals are processed digitally and valid interrogations are detected. Processing includes detection of pulses, determination of each pulse's threshold, determination of intervals between pulses and whether the intervals meet more criteria, and determination of priority of output of digital messages encoded in the pulses. At least one message is supplied to a transmit module 102 via transponder bus 118 in the programmable radio. The transmit module 102 performs diversity processing on the received message to determine to which received signal to reply, produces reply data and modulates the reply data to produce intermediate frequency signals. The intermediate frequency signals are then converted to analog signals, which are transmitted to the interrogator.

Document US-5,818,883 A describes a multi-channel digital transceiver as shown in Fig. 2 thereof. The multi-channel transceiver 400 receives uplink radio frequency signals and converts these signals to digital intermediate frequency signals. Digital signal processing, including a digital converter module 426 is employed to select a digital intermediate frequency signal received at a plurality of antennas 412 and to convert these signals to base band signals. Base band signals are processed to recover a communication channel there from. Downlink base band signals are also processed and digital signal processing within the digital converter module 426 converts the downlink base band signals to digital intermediate frequency signals. The digital intermediate frequency signals are converted to analog radio frequency signals, amplified and radiated from transmit antennas 420.

Document US 5 592 480 A describes a wireless communication system basestation making use of a wideband multichannel digital transceiver having incorporated therein a time division multiple-access (TDM) bus for providing digital samples of a plurality of wireless communication channels, wherein the time slot duration and the frame rate of the TDM bus may be reconfigured. The basestation allows various air interface standards, even those having different channel bandwidths, to be serviced by the same basestation, without having to install additional or different equipment, and by automatically redistributing signal processing resources, eliminating the need to reconfigure the basestation when the different tapes of wireless signaling must be accommodated. The wideband wireless digital basestation consists of a receive antenna, one or more wideband digital tuners, one or more digital channelizers, a time division multiplexed (TDM) bus, a control bus, a plurality of digital signal processors (DSPs), a first subset of which are programmed to operate as demodulators, a second subset of which are programmed to operate a modulators, and a third subset of which are presently idle, a transport signal (T1) encoder, a T1 decoder, one or more digital combiners, one or more wideband digital exciters, a power amplifier, a transmit antenna, a basestation control processor (controller), and a TDM synchronization clock generator. The basestation transmits or receives baseband signals via the control bus and the T1 decoder/encoder to and from a local mobile telephone switching office (MTSO). For the operation of different air interface standards, the basestation includes at least a pair or wideband digital tuners, one for example for receiving TDMA signals and the second for receiving CDMA signals. Each of the DSPs can be configured to execute either a TDMA modulation/demodulation program or a CDMA modulation/demodulation program by accessing the correct program memory.

### BRIEF DESCRIPTION OF THE DRAWINGS

For a better understanding of the invention, reference should be made to the following detailed description taken in conjunction with the accompanying drawings, in which:
FIGURE 1 illustrates a prior art cellular communications network.
FIGURE 2 illustrates a cellular communications network constructed in accordance with an embodiment of the invention.
FIGURE 3 illustrates a broadband input/output processor constructed in accordance with an embodiment of the invention.

Like reference numerals refer to corresponding parts throughout the drawings.

### DETAILED DESCRIPTION OF THE INVENTION

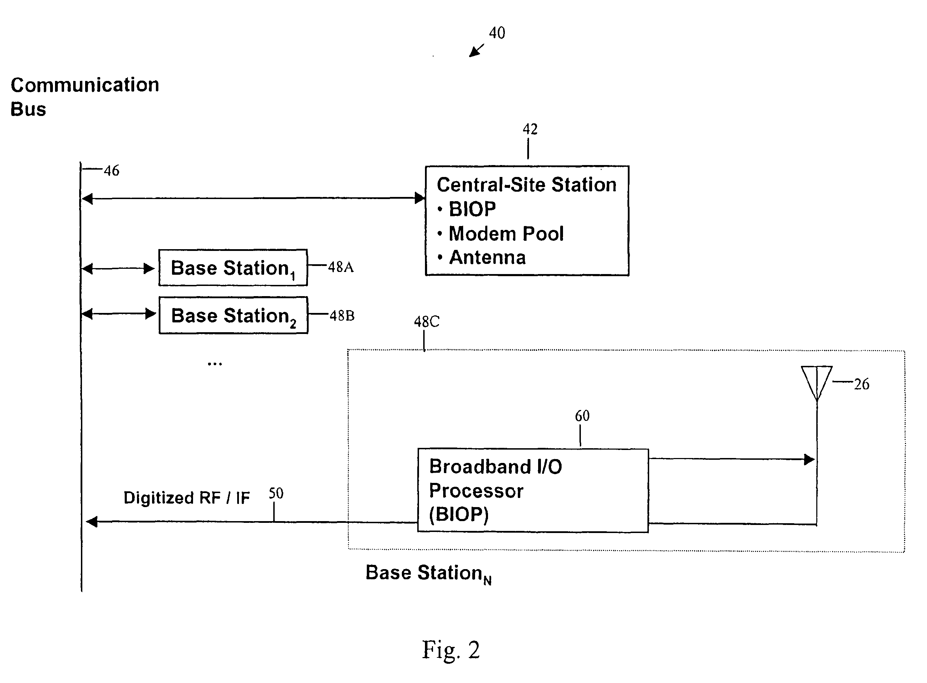

Figure 2 illustrates an improved cellular communications network 40 constructed in accordance with an embodiment of the invention. In Figure 2, the individual base stations 48 each employ a single broadband I/O processor (BIOP). Furthermore, all signal processing modems are co-located in the central site station 42. In transmit mode, the BIOP accepts digitized RF or IF signals from the high-speed system bus 46, converts the digitized signal into a broadband analog RF signal, and delivers the broadband RF signal to the antenna 26. In general, the broadband RF signal includes all individual RF bands of interest. In receive mode, The BIOP accepts the entire / overall RF or IF frequency band of interest, digitizes the in-band information, and delivers the digitized information to system bus 46. The BIOPs at the base stations 48 can be remotely configured by the central site station 42 via the system bus 46 and interface 50. System bus 46 may be implemented according to any standard private or virtual private network that meets minimum quality-of-service requirements. As a benefit, the co-located pool of modems can be serviced and/or reconfigured much more expeditiously, since they are not physically distributed across the base stations. This configuration also simplifies the architecture of the base stations.

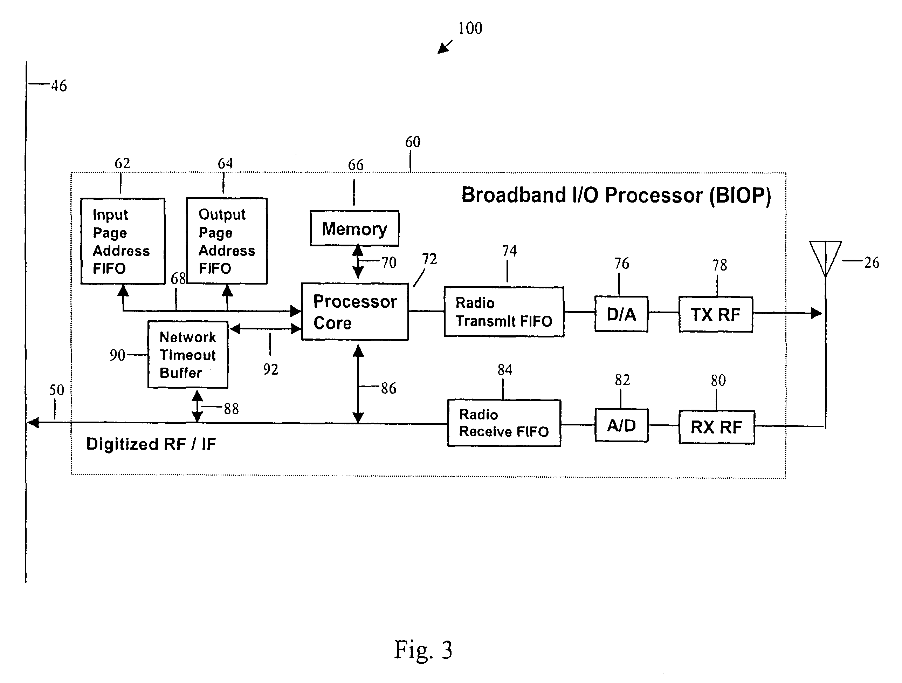

Figure 3 illustrates a broadband input/output processor 60 constructed in accordance with an embodiment of the invention. The processor 60 includes a receive RF subsystem (RX RF) 80 which performs RF amplification and, optionally, block downconversion to IF. Processor 60 also includes an analog-to-digital converter 82 which receives an incoming radio frequency signal. The analog-to-digital converter 82 outputs a digital signal to a radio receive First-In-First-Out (FIFO) 84.

Analogous functionality is provided at the transmission port of the processor 60. In particular, a radio transmit FIFO 74 routes a digital signal to a digital-to-analog converter 76. The digital-to-analog converter 76 produces an analog signal that is transmitted in conjunction with power amplifier 78 in a conventional manner.

Figure 3 also illustrates a broadband input/output processor core 72. The core 72 may be implemented with a microprocessor, a digital signal processor, an FPGA, a PLA, a PLD, a CPLD, a Gate Array, or an ASIC. The core 72 accesses a memory 66, which contains configuration code that enables the core to be programmed to support different wireless standards and services.

The core 72 is also linked to an output page address FIFO 64 and an input page address FIFO 62. Further, the core 72 is connected to a network timeout buffer 90. A communication bus 50 connects the processor 60 to central site station 42 via bus 46.

The core 72 operates in two modes simultaneously. The core 72 is generally under the control of an operating system, either locally or at the central site station 42.

In a first mode of operation, the core 72 operates in a radio receive mode. The core 72 accesses the FIFO 84. The FIFO accommodates the typically bursty nature (variable rate input/output (I/O)) of reads/writes to the communication bus 46. The core 72 configures itself according to which band it is receiving data from in the FIFO, and which central site processing station this data is destined for. Based upon these two parameters, the core 72 downloads the configuration code from memory 66. The configuration code enables the reading of data in the correct format from the FIFO and sets up the transmission format to enable the data to be placed on the communications bus 46 using the proper protocol. To read the data in the correct format out of the FIFO 84, the configuration code must note the sampling rate, the sample word length, and the frame length. To prepare the transmission format for the communications bus 46, the configuration code must note the protocol format, the parameters for the protocol (e.g., block size, timeout duration, ACK/NACK, etc.) and any error-recovery procedures. The Page Address FIFOs 62, 64 hold the physical page addresses associated with buffers in virtual memory located at the central site processing station.

At the end of a page transfer, the core 72 reads the next address from the head of the appropriate Page Address FIFO and begins transferring data to it. The core 72 triggers an interrupt when the supply of page addresses runs low. Servicing this interrupt in a timely manner is critical, and is the responsibility of the operating system at the central site processing station. The network timeout buffer is used to store the last N packets of data sent over the bus as an error-recovery measure.

A second mode of operation is the radio transmit mode. The inputs from the central site processing station are read according to the configuration the core 72 downloads from memory 66. Again, this configuration determines the data format for the data to be read and pumped to the radio transmit FIFO 74 as well as the protocol to use to format communications over the bus 46 and with the central site processing station 42. The page address FIFOs 62, 64 are used by the core 72 to read the radio transmit data from the correct virtual memory location using the communications bus. The protocol for communication is found in the configuration file for the core 72. To read the data in the correct format from the location in virtual memory, the configuration code must note the parameters for the protocol (e.g., block size, timeout duration, ACK/NACK, etc.) and any error-recovery procedures. To prepare the transmission format for the radio transmit FIFO 74, the configuration code must note the protocol format, the sampling rate, the sample word length, and the frame length. The page address FIFOs 62, 64 hold the physical page addresses associated with buffers in virtual memory located at the central site processing station 42. At the end of a page transfer, the core 72 reads the next address from the head of the appropriate page address FIFO and begins transferring from it. The core 72 triggers an interrupt when the supply of page addresses runs low. Again, servicing this interrupt in a timely manner is critical, and is the responsibility of the operating system at the central site processing station 42. The network timeout buffer may or may not be used in the radio transmit mode.

The core 72 must be programmable in that it can be either software configurable or hardware reconfigurable. This allows the storing of configuration information in memory, and the download of this information into the core 72 creates the capability to be a programmable input/output processor.

The foregoing description, for purposes of explanation, used specific nomenclature to provide a thorough understanding of the invention. However, it will be apparent to one skilled in the art that the specific details are not required in order to practice the invention. In other instances, well-known circuits and devices are shown in block diagram form in order to avoid unnecessary distraction from the underlying invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. It is intended that the scope of the invention be defined by the following claims.

## Claims

1. A programmable broadband input/output processor (60), comprising:
a memory (66) to store configuration data;
a radio receive First-In-First-Out circuit (84);
a radio transmit First-In-First-Out circuit (74);
a processor core (72) coupled to said memory (66), said radio receive First-In-First-Out circuit (84), and said radio transmit First-In-First-Out circuit (74), wherein said processor core is operable to selectively receive sub-sets of said configuration data based upon parameters associated with data said processor core is receiving in said radio receive First-In-First-Out circuit (84) and said radio transmit First-In-First-Out circuit (74), and
a communications bus (46) connected to said processor core (72) to selectively relay control information to and from a central site station (42) and **characterized in that** said processor core is operative to configure itself according to said parameters.

2. The programmable broadband input/output processor of claim 1, wherein one of said parameters is a band said processor core (72) is receiving data from said radio receive First-In-First-Out circuit (84).

3. The programmable broadband input/output processor of claim 1 or 2, wherein one of said parameters is which central side processing station said data is destined for.

4. The programmable broadband input/output processor of one of the claims 1 to 3, wherein said configuration data enables a reading of data in a correct format from said receive First-In-First-Out circuit (84) and sets up a transmission format to enable said data to be placed on said communication bus (46) using a proper protocol.

5. The programmable broadband input/output processor of claim 4, wherein said configuration data must note a sampling rate, a sample word length, and a frame length, to read said data in said correct format out of said radio receive First-In-First-Out circuit (84).

6. The programmable broadband input/output processor of claim 4 or 5, wherein said configuration data must note a protocol format, parameters for said protocol, and any error-recovery procedures.

7. The programmable broadband input/output processor of claim 6, wherein said parameters for said protocol comprise block size, time-out duration, and/or ACK/NACK.

8. The programmable broadband input/output processor of one of the claims 1 to 7, further comprising page address First-In-First-Out circuits (62, 64) connected to said processor core (72).

9. The programmable broadband input/output processor of claim 8, wherein said page address First-In-First-Out circuits (62, 64) hold physical page addresses associated with buffers in a virtual memory located at said central site processing station (42).

10. The programmable broadband input/output processor of claim 8 or 9, wherein said processor (72) reads a next address from a head of an appropriate page address First-In-First-Out circuit (62, 64) of said page address First-In-First-Out circuits (62, 64) at an end of a page transfer and begins transferring data to it.

11. The programmable broadband input/output processor of claim 9 or 10, wherein said processor (72) triggers an interrupt when a supply of said page addresses runs low.

12. The programmable broadband input/output processor of one of the claims 1 to 11, further comprising a network timeout buffer (90) connected to said processor core (72).

13. The programmable broadband input/output processor of one of the claims 8 to 12, wherein said page address First-In-First-Out circuits (62, 64) are used by said processor (72), to read a radio transmit data from a correct virtual memory location using said communication bus (46).

14. The programmable broadband input/output processor of claim 13, wherein said configuration data must note parameters for a protocol and any error-recovery procedures.

15. The programmable broadband input/output processor of claim 14, wherein said parameters for said protocol comprise block size, time-out duration, and/or ACK/NACK.

16. The programmable broadband input/output processor of one of the claims 13 to 15, wherein said configuration data must note a protocol format, a sampling rate, a sample word-length, and a frame length to prepare a transmission format for said radio transmit First-In-First-Out circuit (74).

17. The programmable broadband input/output processor of one of the claims 1 to 16, wherein said programmable broadband input/output processor accepts from or delivers to said communications bus (46) digitized radio frequency (RF) or intermediate frequency (IF) signals.

18. A communications network (40), comprising:
a central site station (42) storing a plurality of communications modems; and
a plurality of base stations (48A, 48B, 48C), each base station of said plurality of base stations including said programmable broadband input/output processor (60) according to one of the claims 1 to 16.

## Patentansprüche

1. Ein programmierbarer Breitband-Eingabe-Ausgabe-Prozessor (60), der folgende Merkmale aufweist:
einen Speicher (66), um Konfigurationsdaten zu speichern;
eine Funkempfangs-FIFO-Schaltung (84);
eine Funksende-FIFO-Schaltung (74);
einen Prozessorkern (72), der mit dem Speicher (66), der Funkempfangs-FIFO-Schaltung (84) und der Funksende-FIFO-Schaltung (74) gekoppelt ist, wobei der Prozessorkern betreibbar ist, um Teilsätze der Konfigurationsdaten basierend auf Parametern, die Daten zugeordnet sind, die der Prozessorkern in der Funkempfangs-FIFO-Schaltung (84) und der Funksende-FIFO-Schaltung (74) empfängt, selektiv zu empfangen, und
einen Kommunikationsbus (46), der mit dem Prozessorkern (72) verbunden ist, um Steuerinformationen selektiv zu und von einer Station einer zentralen Stelle (42) weiterzuleiten, und **gekennzeichnet dadurch, dass** der Prozessorkern wirksam ist, um sich selbst gemäß den Parametern zu konfigurieren.

2. Der programmierbare Breitband-Eingabe-Ausgabe-Prozessor des Anspruchs 1, bei dem einer der Parameter ein Band ist, über das der Prozessorkern (72) Daten von der Funkempfangs-FIFO-Schaltung (84) empfängt.

3. Der programmierbare Breitband-Eingabe-Ausgabe-Prozessor gemäß Anspruch 1 oder 2, bei dem einer der Parameter ist, für welche Verarbeitungsstation einer zentralen Stelle die Daten bestimmt sind.

4. Der programmierbare Breitband-Eingabe-Ausgabe-Prozessor gemäß einem der Ansprüche 1 bis 3, bei dem die Konfigurationsdaten ein Lesen von Daten in einem korrekten Format aus der Empfangs-FIFO-Schaltung (84) ermöglichen und ein Sendeformat einrichten, um es zu ermöglichen, dass die Daten unter Verwendung eines geeigneten Protokolls auf dem Kommunikationsbus (46) platziert werden.

5. Der programmierbare Breitband-Eingabe-Ausgabe-Prozessor gemäß Anspruch 4, bei dem die Konfigurationsdaten eine Abtastrate, eine Abtastwortlänge und eine Rahmenlänge vermerken müssen, um die Daten in dem korrekten Format aus der Funkempfangs-FIFO-Schaltung (84) zu lesen.

6. Der programmierbare Breitband-Eingabe-Ausgabe-Prozessor gemäß Anspruch 4 oder 5, bei dem die Konfigurationsdaten ein Protokollformat, Parameter für das Protokoll und jegliche Fehlererholungsprozeduren vermerken müssen.

7. Der programmierbare Breitband-Eingabe-Ausgabe-Prozessor gemäß Anspruch 6, bei dem die Parameter für das Protokoll eine Blockgröße, eine Zeitüberschreitungsdauer und/oder ACK/NACK aufweisen.

8. Der programmierbare Breitband-Eingabe-Ausgabe-Prozessor gemäß einem der Ansprüche 1 bis 7, der ferner Seitenadressen-FIFO-Schaltungen (62, 64) aufweist, die mit dem Prozessorkern (72) verbunden sind.

9. Der programmierbare Breitband-Eingabe-Ausgabe-Prozessor gemäß Anspruch 8, bei dem die Seitenadressen-FIFO-Schaltungen (62, 64) physische Seitenadressen halten, die Puffern in einem virtuellen Speicher zugeordnet sind, der sich an der Verarbeitungsstation einer zentralen Stelle (42) befindet.

10. Der programmierbare Breitband-Eingabe-Ausgabe-Prozessor gemäß Anspruch 8 oder 9, bei dem der Prozessor (72) eine nächste Adresse aus einem Kopf einer geeigneten Seitenadressen-FIFO-Schaltung (62, 64) der Seitenadressen-FIFO-Schaltungen (62, 64) an einem Ende einer Seitenübertragung liest und damit beginnt, Daten in dieselbe zu übertragen.

11. Der programmierbare Breitband-Eingabe-Ausgabe-Prozessor gemäß Anspruch 9 oder 10, bei dem der Prozessor (72) eine Unterbrechung auslöst, wenn ein Vorrat der Seitenadressen zur Neige geht.

12. Der programmierbare Breitband-Eingabe-Ausgabe-Prozessor gemäß einem der Ansprüche 1 bis 11, der ferner einen Netzzeitüberschreitungspuffer (90) aufweist, der mit dem Prozessorkern (72) verbunden ist.

13. Der programmierbare Breitband-Eingabe-Ausgabe-Prozessor gemäß einem der Ansprüche 8 bis 12, bei dem die Seitenadressen-FIFO-Schaltungen (62, 64) durch den Prozessor (72) verwendet werden, um unter Verwendung des Kommunikationsbusses (46) Funksendedaten aus einem korrekten Virtueller-Speicher-Ort zu lesen.

14. Der programmierbare Breitband-Eingabe-Ausgabe-Prozessor gemäß Anspruch 13, bei dem die Konfigurationsdaten Parameter für ein Protokoll und jegliche Fehlererholungsprozeduren vermerken müssen.

15. Der programmierbare Breitband-Eingabe-Ausgabe-Prozessor gemäß Anspruch 14, bei dem die Parameter für das Protokoll eine Blockgröße, eine Zeitüberschreitungsdauer und/oder ACK/NACK aufweisen.

16. Der programmierbare Breitband-Eingangs/Ausgangs-Prozessor gemäß einem der Ansprüche 13 bis 15, bei dem die Konfigurationsdaten ein Protokollformat, eine Abtastrate, eine Abtastwortlänge und eine Rahmenlänge vermerken müssen, um ein Sendeformat für die Funksende-FIFO-Schaltung (74) vorzubereiten.

17. Der programmierbare Breitband-Eingabe-Ausgabe-Prozessor gemäß einem der Ansprüche 1 bis 16, wobei der programmierbare Breitband-Eingabe-Ausgabe-Prozessor digitalisierte Hochfrequenzsignale (RF-Signale) oder Zwischenfrequenzsignale (IF-Signale) von dem Kommunikationsbus (46) annimmt oder an denselben liefert.

18. Ein Kommunikationsnetz (40), das folgende Merkmale aufweist:
eine Station einer zentralen Stelle (42), die eine Mehrzahl von Kommunikationsmodems speichert; und
eine Mehrzahl von Basisstationen (48A, 48B, 48C), wobei jede Basisstation der Mehrzahl von Basisstationen den programmierbaren Breitband-Eingabe-Ausgabe-Prozessor (60) gemäß einem der Ansprüche 1 bis 16 umfasst.

## Revendications

1. Un processeur d'entrée/sortie à large bande programmable (60), comprenant:
une mémoire (66) pour mémoriser les données de configuration;
un circuit 'premier entré premier sorti' de réception de radiocommunication (84);
un circuit 'premier entré premier sorti' d'émission de radiocommunication (74) ;
un noyau de processeur (72) couplé à ladite mémoire (66), audit circuit 'premier entré premier sorti' de réception de radiocommunication (84), et audit circuit 'premier entré premier sorti' d'émission de radiocommunication (74), où ledit noyau de processeur peut être actionné pour recevoir sélectivement des sous-ensembles desdites données de configuration sur base des paramètres associés aux données que ledit noyau de processeur reçoit dans ledit circuit 'premier entré premier sorti' de réception de radiocommunication (84) et ledit circuit 'premier entré premier sorti' d'émission de radiocommunication (74),
un bus de communications (46) relié audit noyau de processeur (72) destiné à relayer sélectivement les informations de commande vers et d'une station de site central (42),
et **caractérisé par le fait que** ledit noyau de processeur est opérationnel pour se configurer selon lesdits paramètres.

2. Processeur d'entrée-sortie à large bande programmable selon la revendication 1, dans lequel l'un desdits paramètres est une bande dans laquelle ledit noyau de processeur (72) reçoit des données dudit circuit 'premier entré premier sorti' de réception de radiocommunication (84).

3. Processeur d'entrée-sortie à large bande programmable selon la revendication 1 ou 2, dans lequel l'un desdits paramètres est la station de traitement latérale centrale à laquelle les données sont destinées.

4. Processeur d'entrée-sortie à large bande programmable selon l'une des revendications 1 à 3, dans lequel lesdites données de configuration permettent une lecture des données dans un format correct dudit circuit 'premier entré premier sorti' de réception de radiocommunication (84) et établissent un format de transmission pour permettre de placer lesdites données sur ledit bus de communication (46) à l'aide d'un protocole correct.

5. Processeur d'entrée-sortie à large bande programmable selon la revendication 4, dans lequel lesdites données de configuration doivent désigner un taux d'échantillonnage, une longueur de mot d'échantillon, et une longueur de trame, pour lire lesdites données dans ledit format correct dudit circuit 'premier entré premier sorti' de réception de radiocommunication (84).

6. Processeur d'entrée-sortie à large bande programmable selon la revendication 4 ou 5, dans lequel lesdites données de configuration doivent désigner un format de protocole, des paramètres pour ledit protocole, et toutes procédures de récupération d'erreur.

7. Processeur d'entrée-sortie à large bande programmable selon la revendication 6, dans lequel lesdits paramètres pour ledit protocole comprennent la grandeur de bloc, la durée de temps limite, et/ou ACK/NACK.

8. Processeur d'entrée-sortie à large bande programmable selon l'une des revendications 1 à 7, comprenant par ailleurs des circuits 'premier entré premier sorti' d'adresse de page (62, 64) reliés audit noyau de processeur (72).

9. Processeur d'entrée-sortie à large bande programmable selon la revendication 8, dans lequel lesdits circuits 'premier entré premier sorti' d'adresse de page (62, 64) contiennent des adresses de page physiques associées à des tampons dans une mémoire virtuelle située à ladite station de traitement de site central (42).

10. Processeur d'entrée-sortie à large bande programmable selon la revendication 8 ou 9, dans lequel ledit processeur (72) lit une adresse suivante d'une tête d'un circuit 'premier entré premier sorti' d'adresse de page approprié (62, 64) desdits circuits 'premier entré premier sorti' d'adresse de page (62, 64) à la fin d'un transfert de page et commence à lui transférer des données.

11. Processeur d'entrée-sortie à large bande programmable selon la revendication 9 ou 10, dans lequel ledit processeur (72) déclenche une interruption lorsqu'une fourniture desdites adresses de page diminue.

12. Processeur d'entrée-sortie à large bande programmable selon l'une des revendications 1 à 11, comprenant par ailleurs un tampon de temps limite de réseau (90) relié audit noyau de processeur (72).

13. Processeur d'entrée-sortie à large bande programmable selon l'une des revendications 8 à 12, dans lequel lesdits circuits 'premier entré premier sorti' d'adresse de page (62, 64) sont employés par ledit processeur (72) pour lire une donnée de transmission des radiocommunication d'un emplacement de mémoire virtuelle correct à l'aide dudit bus de communication (46).

14. Processeur d'entrée-sortie à large bande programmable selon la revendication 13, dans lequel lesdites données de configuration doivent désigner des paramètres pour un protocole et toutes procédures de récupération d'erreur.

15. Processeur d'entrée-sortie à large bande programmable selon la revendication 14, dans lequel lesdits paramètres pour ledit protocole comprennent la grandeur de bloc, la durée de temps limite, et/ou ACK/NACK.

16. Processeur d'entrée-sortie à large bande programmable selon l'une des revendications 13 à 15, dans lequel lesdites données de configuration doivent désigner un format de protocole, un taux d'échantillonnage, une longueur de mot d'échantillon, et une longueur de trame pour préparer un format de transmission pour ledit circuit 'premier entré premier sorti' de transmission de radiocommunication (74).

17. Processeur d'entrée-sortie à large bande programmable selon l'une des revendications 1 à 16, dans lequel ledit processeur d'entrée-sortie à large bande programmable accepte dudit ou délivre audit bus de communications (46) des signaux de radiofréquence (RF) ou de fréquence intermédiaire numérisés (FI).

18. Réseau de communications (40), comprenant:
une station de site central (42) mémorisant une pluralité de modems de communications; et
une pluralité des stations de base (48A, 48B, 48C), chaque station de base de ladite pluralité de stations de base comportant ledit processeur d'entrée-sortie à large bande programmable (60) selon l'une des revendications 1 à 16.
